# EUROPEAN PATENT APPLICATION

(11) **EP 2 151 347 A1**
(43) Date of publication of application: **10.02.2010**
(21) Application number: 08014130.2
(22) Date of filing: 07.08.2008
(51) Int. Cl.: B60L 9/22, B60L 9/28, H02K 1/27

(54) **Arrangement for generating a traction force of a track bound vehicle**

(71) Applicant: Bombardier Transportation GmbH, 10785 Berlin (DE)
(72) Inventor: Sandberg, Asa, 72240 Västeras (SE); Andersson, Svante, 72481 Västeras (SE)
(74) Representative: Patentanwälte Bressel und Partner

(57) **Abstract**

The invention relates to an arrangement for generating a traction force of a track bound vehicle, in particular of a rail vehicle. The arrangement comprises a traction converter adapted to convert a direct current (DC) to an alternating current (AC), the traction converter having a first interface for connecting the traction converter to a power source on a direct current side and having a second interface for connecting the traction converter to at least one traction motor on an alternating current side. Furthermore, the arrangement comprises a traction motor which is connected to the second interface. A rotor (1) of the traction motor is designed to generate the magnetic flux required to operate the motor using permanent magnets (2, 3), wherein the permanent magnets (2, 3) are mounted in the interior of the rotor (1).

## Description

The invention relates to an arrangement for generating a traction force of a track bound vehicle, in particular of a rail vehicle. More specifically, the present invention relates to motors for drives for traction vehicles.

Today, the most widely used motor for traction vehicles is the induction motor. These motors have losses in the rotor caused by the slip and thus reducing the efficiency. If the pole number of the rotor for any electric machine can be increased, the airgap (between the rotor and the stator) volume or the active volume can be increased, and as a result, the torque capability of the motor can be increased. It is difficult to obtain good performance with a high polenumber using an induction motor. Usually, the optimal pole number for an induction motor in a traction application is 4 or 6 poles.

According to the present invention a permanent magnet or a set of permanent magnets is used to produce the magnetic flux of the rotor, so that a synchronous motor for traction vehicles instead of an induction motor is achieved. Such a motor is often called permanent magnet synchronous motor (PMSM).

A PMSM has lower rotor losses compared to an induction motor, and thus higher efficiency. It can also be built with a higher pole number, compared to an induction motor, without sacrificing performance, and thus it can have a higher torque capability.

It is proposed to mount the magnets of the synchronous motor in the interior of the rotor. As a result, the manufacturing of the motor will be less costly. It will also give more opportunities to adapt the parameters of the machine to the requirements and to protect the magnets.

The permanent magnet excited synchronous motor can utilize the same power circuit as the induction motor. In particular, the PMSM can be part of the same arrangement for producing traction power as an induction motor.

A PMSM generates voltage whenever it is rotated and may generate excessive current when short-circuited. Therefore, according to a preferred embodiment of the invention, electrical switches are provided to disconnect the motor from the traction converter in case there is a fault in the converter.

Usually, the thermal capability of the stator windings of a motor for traction applications allows a higher average temperature than 200°C in order to be able to dissipate losses in more efficient manner. The same is also true for a PMSM, and it is therefore proposed to utilize a stator winding of high thermal performance.

A gearbox may be combined with the PMSM in order to transfer mechanical energy (for example to the axle of a rail vehicle). A gearbox will increase the torque on the wheel shaft of the vehicle and thus reduces the required motor volume.

The PMSM can be cooled by any method of cooling which is normally used for traction motors. The motor can be self ventilated or force cooled by air or by water, depending on the type of vehicle it is mounted in.

Embodiments of the invention will be described with reference to the attached drawing. The figures of the drawing show:
- Fig. 1: a cross sectional view of a rotor having a set of permanent magnets for generating the magnetic flux of the rotor,
- Fig. 2: an arrangement for providing traction energy of a vehicle, wherein electric energy is provided by an AC power supply network,
- Fig. 3: an arrangement for providing traction energy of a vehicle, wherein electric energy is provided by an AC power supply network.

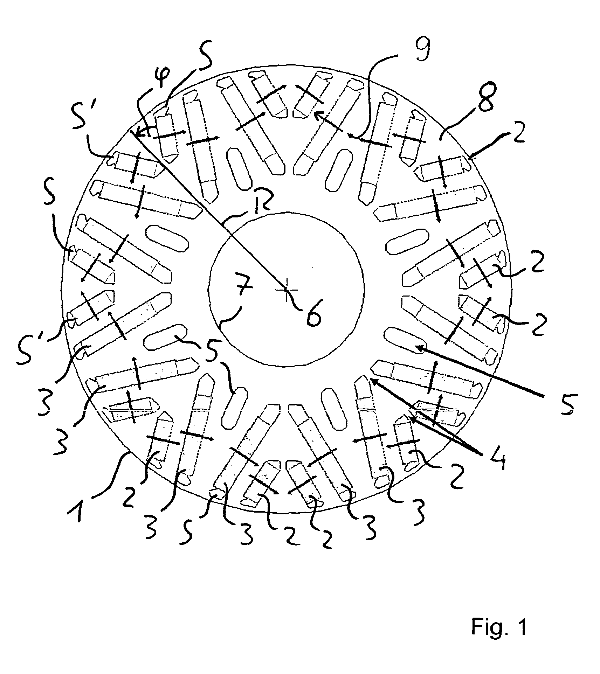

Figure 1 shows a cross-section through a rotor 1 of a permanent magnet synchronous motor (PMSM). The axis of rotation is denoted by 6. The rotor comprises a plurality of circular discs made of steel which are stacked in order to form the rotor. Figure 1 shows one of the discs. The discs are fixed to a cylindrical shaft 7. Both the shaft 7 and the discs are coaxial to the axis of rotation 6.

Several slots S are cut out of the interior of the discs. Only some of the slots S are denoted by " S " and " S' " in figure 1. Each of the slots S, S' extends in a longitudinal direction which is parallel to the axis of rotation 6, i.e. extends perpendicularly to the image plane of figure 1. Each of the slots is filled with a permanent magnet 2, 3, preferably made of a high-energy magnet material, such as NdFeB.

In the image plane of figure 1 (and in all parallel planes of the rotor 1), which plane extends perpendicularly to the axis of rotation 6, the slots S extend lengthwise in a direction which is inclined with reference to the radial direction. One radius line is denoted by "R" in figure 1. The inclination angle is denoted by "*φ*". In the embodiment shown, all slots S are inclined by the same inclination angle and all slots S' are inclined by an inclination angle having the same amount, but is oriented in the opposite direction, i.e. the inclination angle is "*-φ*". For each slot S there is a corresponding slot S', wherein the inclination angle of slot S is given by *φ* and wherein the inclination angle of the corresponding slot S' is given by -*φ*. Furthermore the corresponding slots S, S' are located at the same distance to the axis of rotation 6, so that a radius line R can be defined for each pair of corresponding slots and the slots are located and oriented symmetrically to this radius line R.

Furthermore, there are two pairs of corresponding slots S, S' in each region around the rotor 1. One of the corresponding pairs has a greater length (filled with magnet 3) and one pair has a smaller length (filled with magnet 2). Both pairs are symmetric to the same radius line R. Consequently, the two pairs of corresponding slots form a double V, wherein the smaller V is located at least partly inside the opening of the larger V and the acute ends of the Vs are pointing to the axis of rotation 6. In circumference direction, these double Vs have two neighbour double Vs, but the magnetic fields of the magnets in the slots of the neighbours are oriented in the opposite direction (as indicated by arrows in figure 1). In total there eight double Vs, so that the pole number of the rotor 1 is eight.

The slots are placed so that the magnet flux is concentrated and the flux-density in the airgap between the rotor and the stator can be higher than the flux-density in the magnets. Furthermore, the slots are placed so that the rotor will be salient, i.e. the synchronous inductance in the q-direction (the direction from the north pole to the south pole of the whole rotor) is higher than in the d-direction (the direction in between the poles of the rotor).

At the acute end of the V (for example as indicated by "4"), only a comparatively small "bridge" made of the disc material separates the slots S, S'. The dimension of the bridge, i.e. the distance between the slots S, S' is a factor which influences the maximum allowed speed of the rotor. In particular, the bridge must withstand the centrifugal forces acting on the magnets and the rotor poles. If the rotor rotates at a higher speed, the material at the bridges might break and the rotor might be damaged.

The bridges also have the function that the material at the bridges will saturate and thus limit the leakage of magnet flux.

There are further slots 5 (in the example eight slots, corresponding to the pole number) extending perpendicularly to the image plane of figure 1 through the whole rotor 1 and these slots 5 are not filled with permanent magnets. During rotation of the rotor 1, air can flow through the slots 5 and the interior of the rotor is thereby cooled.

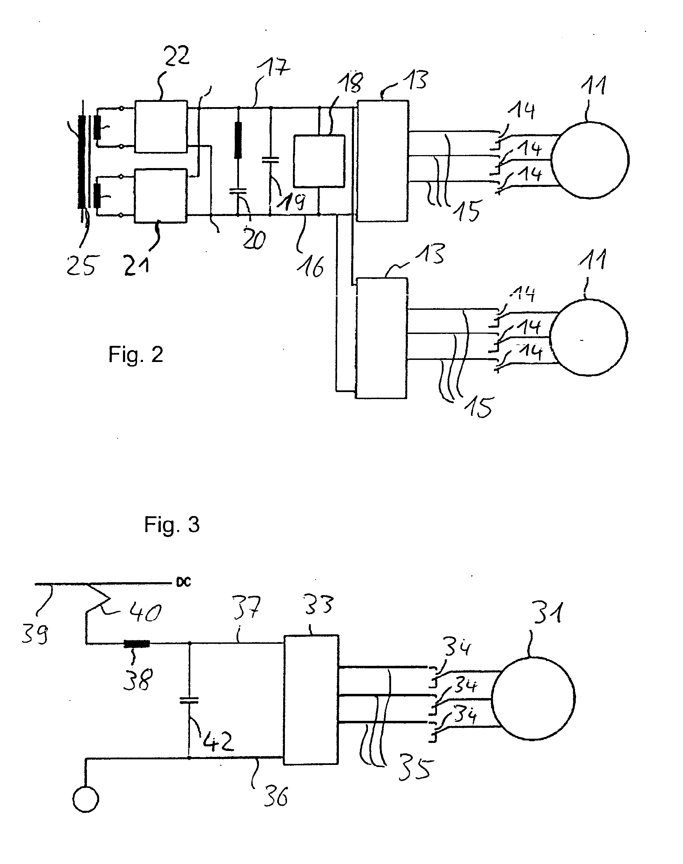

Figure 2 shows an arrangement comprising two PMSM 11. Each of the motors 11 is connected to a traction converter 13 via a three-phase AC connection 15. There is a switch 14 in each of the lines of the three-phase AC connections 15.

The DC-side of the traction converters 13 is connected to DC lines 16, 17. An overvoltage protection device 18, a capacitor bank 19 and a filter branch 20 for filtering harmonic frequencies are connected between the DC lines 16, 17.

The DC lines 16, 17 are also connected to line converters 21, 22. The AC side of the line converters 21, 22 is connected to a transformer 25 and the transformer 25 is connected to the AC line (not shown in detail).

Figure 3 shows an arrangement comprising one PMSM 31. The motor 31 is connected to a traction converter 33 via a three-phase AC connection 35. There is a switch 34 in each of the lines of the three-phase AC connections 35.

The DC-side of the traction converter 33 is connected to DC lines 36, 37. A capacitor bank 42 is connected between the DC lines 36, 37 and a filter inductance 38 (DC choke) is provided in line 37. This line 37 is connected to a DC power supply network 39, for example via a pantograph 40.

## Claims

1. An arrangement for generating a traction force of a track bound vehicle, in particular of a rail vehicle, the arrangement comprising:
• a traction converter (13) adapted to convert a direct current (DC) to an alternating current (AC), the traction converter (13) having a first interface for connecting the traction converter (13) to a power source on a direct current side and having a second interface for connecting the traction converter (13) to at least one traction motor (11) on an alternating current side,
• a traction motor (11) which is connected to the second interface,
wherein a rotor (1) of the traction motor (11) is designed to generate the magnetic flux required to operate the motor (11) using permanent magnets (2, 3) and wherein the permanent magnets (2, 3) are mounted in the interior of the rotor (1).

2. The arrangement of the preceding claim, wherein the arrangement comprises:
• a traction transformer (25) having a primary winding and a secondary winding,
• a line converter (21, 22) consisting of one or several pulsed converters adapted to convert an alternating current in a power supply line to a direct current, wherein the line converter (21, 22) is connected to the secondary winding of the traction transformer (25),
• a capacitor battery (19) connected to the DC terminals of the pulsed inverter/inverters,
wherein the traction converter (13) is consisting of one or several pulsed converters and the first interface being connected to the capacitor battery (19).

3. The arrangement of claim 1, wherein the arrangement comprises a DC choke (38) having a first terminal connected to a DC power source (39) and a second terminal connected to a capacitor battery (42) connected electrically in parallel with the DC terminals of the traction converter (33).

4. The arrangement of one of the two preceding claim, further comprising a series-resonant circuit (20) electrically connected in parallel with the capacitor battery (19).

5. The arrangement of one of the three preceding claims, further comprising an overvoltage protection device (18) electrically connected in parallel with the capacitor battery (19).

6. The arrangement of one of the preceding claims, the arrangement comprising electrical power connections (15) connecting the traction motor (11) with the second interface, wherein one or several of the electrical power connections (15) between the traction converter (13) and the traction motor (11) comprise an electrical switch (14), which can be actuated in order to interrupt the power connection (15).

7. The arrangement of one of the preceding claims, wherein the traction motor (11) is connected to a gearbox for transferring mechanical energy for producing traction of the vehicle.

8. The arrangement of one of the preceding claims, wherein the motor (11) is combined with a fan for producing an airflow for cooling the motor (11) and wherein the fan is mounted on a rotating shaft of the motor.

9. The arrangement of one of the preceding claims, wherein the motor (11) is combined with a fan for producing an airflow for cooling the motor (11) and wherein the fan is a fan external to the motor (11).

10. The arrangement of one of the preceding claims, wherein the motor (11) is combined with a cooling system adapted to cool the motor (11) using a cooling liquid.

11. The arrangement of the preceding claim, wherein the cooling liquid is water.

12. The arrangement of one of the preceding claims, wherein the average temperature of windings of at least one electromagnet of the stator of the motor is allowed to exceed 220°C.

13. The arrangement of one of the preceding claims, wherein the average temperature of windings of at least one electromagnet of the stator of the motor is allowed to exceed 200°C.
